# EUROPEAN PATENT SPECIFICATION

(11) **EP 2 158 101 B1**
(45) Date of publication and mention of the grant of the patent: **02.05.2012**
(21) Application number: 08827248.9
(22) Date of filing: 13.05.2008
(51) Int. Cl.: B60K 6/36, B60K 1/00, B60K 17/16, F16H 57/02

(54) **DEVICE FOR A MOTOR VEHICLE AND A VEHICLE PROVIDE WITH SUCH DEVICE**
VORRICHTUNG FÜR EIN KRAFTFAHRZEUG UND DAMIT AUSGESTATTETES FAHRZEUG
DISPOSITIF POUR VÉHICULE MOTORISÉ ET VÉHICULE COMPRENANT UN TEL DISPOSITIF

(30) Priority: 18.05.2007 SE 0701209
(43) Date of publication of application: 03.03.2010
(73) Proprietor: Scania CV AB (PUBL), 151 87 Södertälje (SE)
(72) Inventor: OHLSSON, Johan, S-641 45 Katrineholm (SE); OVERGAARD, Lars, DK-8600 Silkeborg (DK)
(86) International application number: PCT/SE2008/050554
(87) International publication number: WO 2009/022958

(56) References cited:
- EP-A2- 1 101 645
- WO-A2-2006/122649
- DE-A1-102004 058 572
- FR-A1- 2 693 527
- US-A- 5 917 248
- US-A- 6 059 684
- US-A1- 2006 166 777

## Description

### TECHNICAL FIELD

The present invention relates to a device for a motor vehicle comprising a driving unit provided with a housing, and a driven unit connected mechanically to the driving unit via a shaft coupling. The device is particularly intended for a motor vehicle in which the space for a driving unit is short and a compact rear axle/engine installation is required, e.g. in a bus of hybrid configuration. The device relates particularly to a driveline comprising an electric motor coupled mechanically to a differential/gear. The invention also covers a vehicle provided with such a device.

### BACKGROUND

The design of heavy vehicles, especially buses, involves endeavouring to make the floor surface as large, wide and long as possible in order to maximise the passenger space. At the same time it is desired to make the floor as low as possible in order to make it easier for passengers to enter/leave the bus. This entails short front and rear axle configurations to allow as much passenger compartment space as possible, and the engine and driveline are therefore often situated far back in the chassis of the bus. How short the rear overhang of a vehicle can be depends on the configuration of the rear axle and the driving unit. The extent of the axle, with differential/gear etc., and the engine therefore needs to be as short as possible in the longitudinal direction of the bus.

By hybrid solutions and using an electric motor, preferably with high torque, it is possible to eliminate the need for an extra gear between the prime mover and the differential, directly resulting in a shorter and more compact installation.

Such a forward drive usually comprises a combustion engine driving an electrical generator which itself drives an electric motor. The electric motor is coupled to a gear or directly to the differential of the rear axle which, via driveshafts, drives the vehicle's wheels.

An example of a known solution resulting in a more compact driveline for a motor vehicle is referred to in the specification of patent EP1063118 applied for by Nissan Motor, in the form of a driveline in which the power from an electric motor is transmitted via a differential. The electric motor and the differential are so situated relative to one another that the output shaft of the electric motor and the shaft of the differential are parallel to one another as seen in the vehicle's longitudinal direction, but displaced sideways relative to one another. An object of that solution is to reduce the number of bearings in the driveline in order to reduce the mechanical losses in the power transmission.

Another example of a driveline configuration with an electric motor is referred to in the specification of patent FR2693527 applied for by Peugeot and Citroen, in the form of a solution in which the prime mover is situated at the end portion of the transmission and has a shaft which protrudes from the differential and through the whole electric motor via a hollow shaft. The result is a compact driveline with an integrated engine, gearbox and differential.

DE102004058572 describes a driving axle that has differential gear (24) which is formed as self-locking differential gear and the brake mechanism (29) has direct effect on the differential gear housing (18) whereby brake mechanism is formed as multiple disk brake. The brake mechanism has a brake lever (33) with a spherical cap shaped contact surface (34) for generation of equal contact pressure. An independent claim is also included for an industrial truck.

EP1101645 shows a low floor drive unit assembly for an electrically driven vehicle. The assembly comprising: a driving axle shaft (24) defining an axis of rotation (26); a wheel hub (28) driven about said axis (26); an electric motor (30) for driving said driving axle shaft (24); a first suspension beam (29) extending transversely to said axis (26) and adjacent to said wheel hub (28).

### SUMMARY OF THE INVENTION

The object of the present invention is to solve the aforesaid problem and provide a device by which it is possible to achieve a short and compact driveline which is particularly intended for a motor vehicle such as a bus or the like, has as few parts as possible, is relatively inexpensive to manufacture, fit and maintain and thus occupies as little space as possible in the vehicle.

A further object of the present invention is that the device should be usable for various types of prime movers such as electric motors, hydraulic motors, pneumatic motors etc.

Another object is that the device should be usable in a vehicle with a forward drive of hybrid configuration.

A further object of the invention is that the device should be usable for achieving short and compact drive units for other purposes, e.g. for generating electrical energy in cases where a prime mover is coupled to a generator.

A further object is that the invention should also comprise a vehicle provided with such a device.

The abovementioned and other objects are achieved according to the invention by the features of claim 1, viz. that the shaft of the driving unit is supported in the latter's housing at a first end which points away from the driven unit, and that the shaft coupling is arranged at a second end of the shaft which points towards the driven unit, which shaft coupling is adapted to transmitting radial forces on the shaft to the shaft of the driven unit, which forces are absorbed by at least one bearing arranged in the driven unit, and by the features indicated in claim 7, viz. that a vehicle comprises a device according to any one of claims 1-6.

Further features and advantages of the invention are indicated by the description set out below and the attached drawings and claims.

### BRIEF LIST OF THE DRAWINGS

The invention is described in more detail below in the form of at least one preferred embodiment example with reference to the attached drawings.
**Figure 1** depicts a perspective view as seen obliquely from in front of a bus of hybrid configuration.
**Figure 2** depicts a perspective view as seen obliquely from behind of the bus according to Figure 1, in which the vehicle's components are visible through the bodywork.
**Figure 3** depicts the compact driveline according to the invention comprising an electric motor and a differential connected to one another as an integrated unit.
**Figure 4** depicts in perspective the driveline according to Figure 3, partly cut away.
**Figure 5** depicts in side view a section through the electric motor and its connection to the differential.
**Figure 6** depicts in more detail the connection between the shaft of the electric motor and the shaft of the differential, in cross-section.

### DESCRIPTION OF PREFERRED EMBODIMENTS

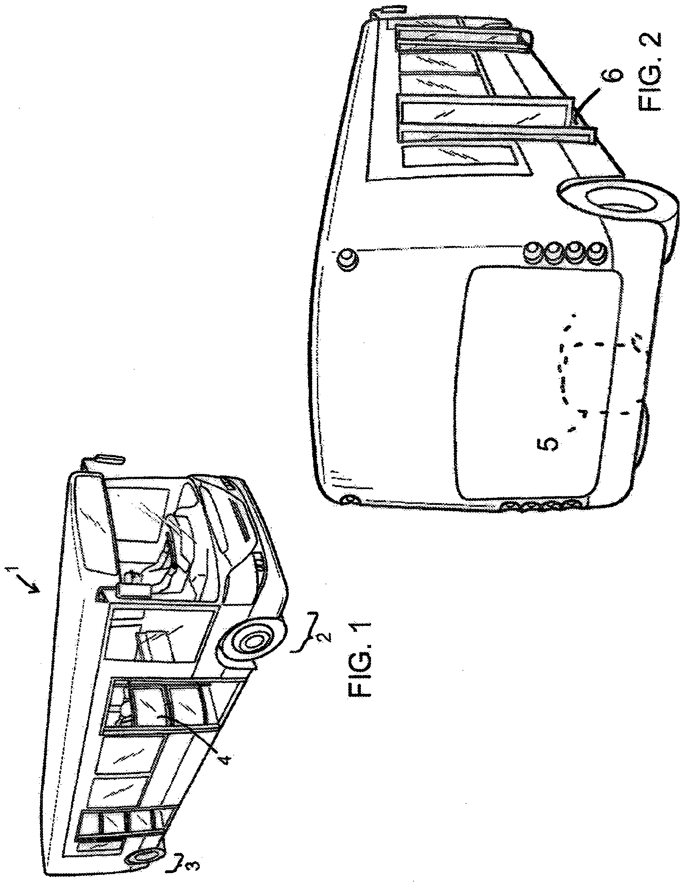

**Figure 1** depicts a perspective view as seen obliquely from in front of a bus 1 provided with a propulsion device of hybrid type (not depicted). The bus 1 has, in the manner mentioned, short front and rear axle portions 2, 3 and a passenger compartment 4 situated between these two portions 2, 3. The result is a passenger compartment 4 with as large a surface area as possible. What limits how short a rear overhang the rear axle portion 3 may have is the configuration of the rear axle and the prime mover. The axle and the engine therefore need to be as short as possible.

**Figure 2** depicts a perspective view as seen from behind of the bus 1 depicted in Figure 1. The diagram shows elements of the driveline, e.g. the electric motor, fitted here behind a protective cover 5. The differential is masked by the electric motor and its cover 5 but is situated immediately in front of it, as seen in the longitudinal direction of the bus. The low floor 6 of the bus is also visible in the diagram.

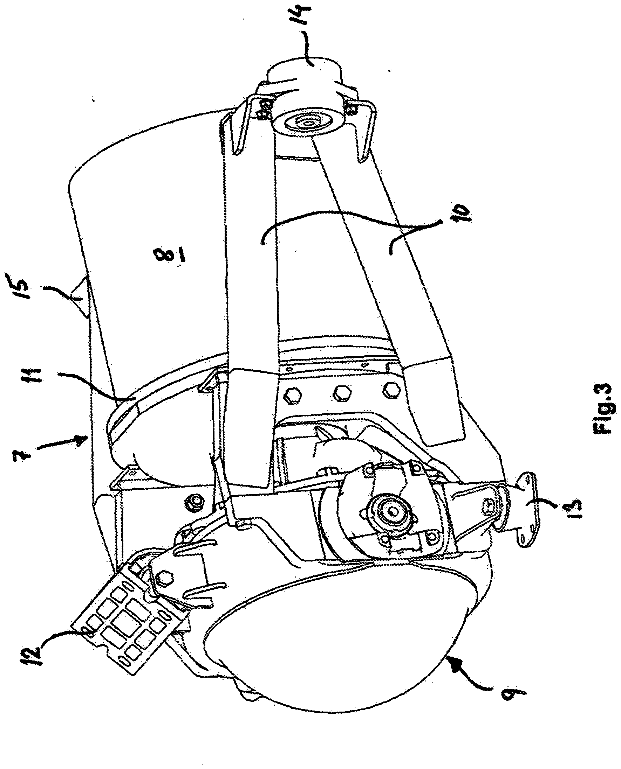

**Figure 3** depicts the compact driveline 7 according to the invention with an electric motor 8 and a differential 9, here configured as an integrated unit together with a suspension device 10. The electric motor 8 is fitted to the differential 9 via a purpose-made flange 11. The whole unit is fitted to the vehicle's chassis (not depicted) via purpose-made brackets 12-15.

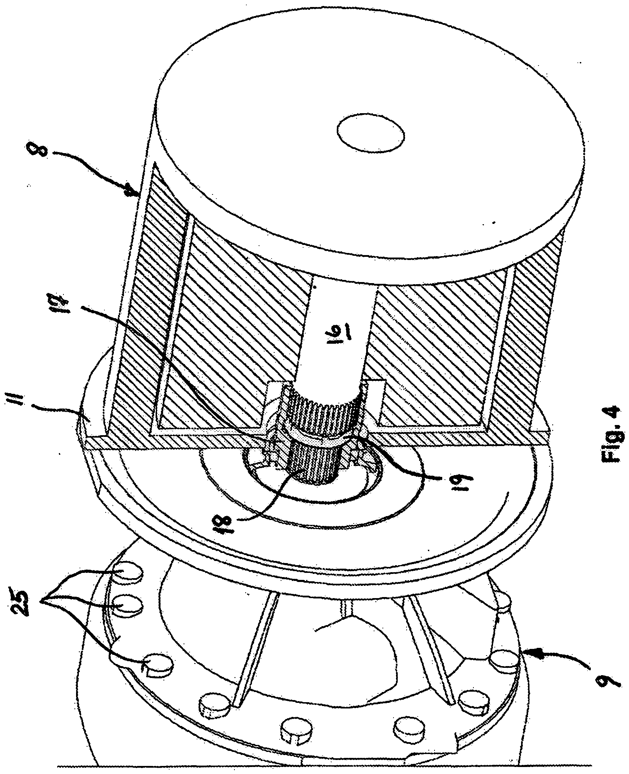

**Figure 4** depicts in perspective portions of the driveline according to Figure 3, taking a cross-section through the electric motor 8 and exposing its shaft 16, and a readily removable/releasable coupling 17 to the shaft 18 of the differential. The electric motor 8 is fitted to the differential 9 via the flange 11. The shaft 16 of the electric motor 8 is coupled to the shaft 18 of the differential 9 via a sleeve-like coupling 17, and splines are provided at the end portions of both shafts, preventing the sleeve 17 from rotating relative to the shafts 16, 18. The sleeve 17 is fastened to the shaft end of the differential 9 by a nut 19.

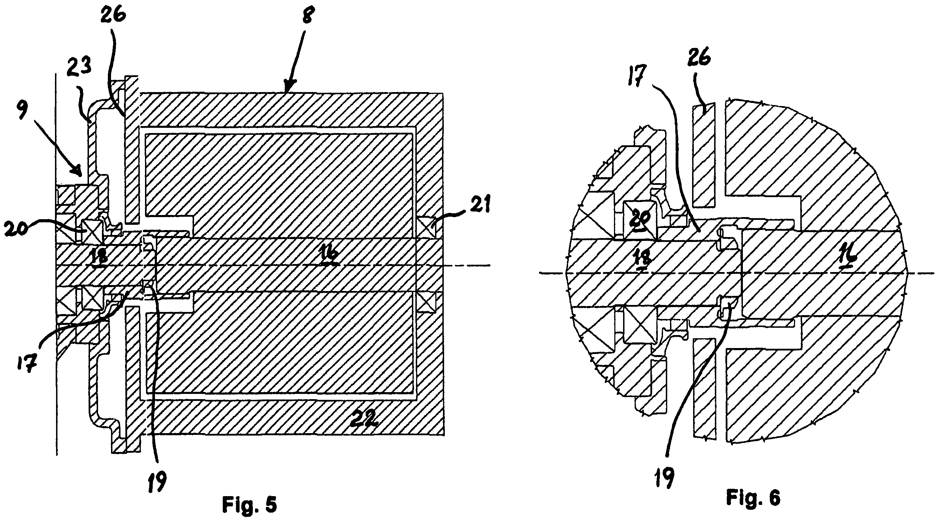

**Figure 5** depicts a cross-section, in side view, through the electric motor 8, the coupling 17 and part of the differential 9. It shows more clearly that the shaft 16 of the electric motor 8 lacks a bearing at its end portion which points towards the differential 9 and that the bearing 20 of the differential 9 therefore assumes the function of absorbing radial forces which occur in the shaft 16 of the electric motor 8. The shaft 16 of the electric motor 8 is supported, however, in a bearing 21 situated in the housing 22 of the electric motor 8 at the other end portion which points away from the differential 9. The sleeve-like coupling 17 centres the shaft 16 of the electric motor 8 and is arranged at least partly within the electric motor 8, within the housing 22 of the electric motor 8, preferably at the location where a shaft bearing would otherwise be situated.

The fact that the shaft 18 of the differential 9 is supported in at least one bearing 20 in its housing 23 and is situated close to the sleeve-like coupling 17 for the electric motor 8 means that there is no need for the shaft 16 of the electric motor 8 to be supported at the end which points towards the differential 9. The radial forces which occur in the shaft 16 of the electric motor 8 are therefore transmitted via the sleeve-like coupling 17 to the shaft 18 of the differential 9 and are absorbed by one or more bearings 20 situated in the differential 9.

The coupling is in this case fitted to the shaft 18 of the differential 9 by a nut 19. The splines prevent the sleeve-like coupling 17 from rotating on the shaft 18. The splined shaft 16 of the electric motor 8 is introduced into the sleeve-like coupling 17 and the two units 8, 9 are fixed mechanically to one another by threaded connections 25 (see Figure 4) in the flange 11. As the diagram indicates, the sleeve-like coupling 17 penetrates at least partly within the outer housing 22 of the electric motor 8 within the housing endwall 26 which faces towards the differential 9.

A compact rear axle electric motor installation is thus achieved according to the invention by eliminating the shaft/rotor bearing in the electric motor 8 which is situated closest to the differential 9. The shaft 16 of the electric motor 8 is therefore connected directly to the pinion shaft 18 of the differential 9 and the two shafts 16, 18 use the bearing 20 which is already provided in the differential 9. This saves both space and costs and also reduces the transmission losses in the driveline.

**Figure 6** depicts in cross-section and in more detail the sleeve-like coupling 17 situated at the end of the shaft 16 of the electric motor 8 and at the end of the shaft 18 of the differential 9. It also shows the bearing 20 which absorbs the radial forces in the shaft 18 of the differential 9 and which replaces the eliminated bearing of the electric motor shaft 16.

The invention is described above with reference to a preferred embodiment. The invention is of course not limited thereto, since other embodiments and variants of the invention are also possible within the scope of protection of the claims.

Thus, instead of the radial forces in the shaft of the electric motor being transmitted to the shaft of the differential and being absorbed by the bearings of the differential, it is of course possible to do the opposite, i.e. to eliminate one or more bearings in the differential and have the radial forces which occur in the shaft of the differential absorbed by bearings arranged at the two ends of the electric motor shaft. The sleeve-like coupling may also be fastened to the shaft of the electric motor instead of to the shaft of the differential.

Instead of an electric motor, it is of course possible to use other kinds of driving units, e.g. hydraulic motors, pneumatic motors, combustion engines etc. The device may also be used in a vehicle in which propulsion is provided by a hybrid configuration, e.g. an electric hybrid solution. Here it is also possible to use, for example, a fuel cell unit.

The invention is also applicable in the generation of electrical energy where, for example, a prime mover is coupled to a generator. The invention may also be used in retardation devices.

## Claims

1. A device for a motor vehicle comprising a driving unit (8) provided with a housing (22), and a driven unit (9) connected mechanically to the driving unit (8) via a shaft coupling (17), wherein the shaft (16) of the driving unit (8) is supported in the latter's housing (22) at a first end which points away from the driven unit (9), and that the shaft coupling (17) is arranged at a second end of the shaft (16) which points towards the driven unit (9), which shaft coupling is adapted to transmitting radial forces on the shaft (16) to the shaft (18) of the driven unit (9), which forces are absorbed by at least one bearing (20) arranged in the driven unit (9), and the shaft (16) **of** the driving unit (8) is only supported at its first end and it extends within the housing (22) of the driving unit (8), i.e. within the endwall (26) of the housing (22), furthermore the sleeve-like coupling (17) is wholly or partly arranged within the housing (22) of the driving unit (8), i.e. within the endwall (26) of the housing (22).

2. A device according to claim 1, ***characterised* in that** the shaft (16) of the driving unit (8) and the shaft (18) of the driven unit (9) are arranged coaxially to one another.

3. A device according to one or more of the foregoing claims, ***characterised* in that** the shaft coupling (17) is substantially sleeve-like.

4. A device according to one or more of the foregoing claims, ***characterised* in that** the shaft coupling (17) is adapted to being easy to release.

5. A device according to one or more of the foregoing claims, ***characterised* in that** the driving unit (8) is an electric motor.

6. A device according to one or more of the foregoing claims, ***characterised* in that** the driven unit (9) is a differential.

7. A vehicle comprising a device according to any one of claims 1-6.

## Patentansprüche

1. Vorrichtung für ein Kraftfahrzeug, welche eine Antriebseinheit (8) umfasst, die mit einem Gehäuse (22) versehen ist, und eine angetriebene Einheit (9), die mechanisch mit der Antriebseinheit (8) über eine Wellenkupplung (17) verbunden ist, wobei die Welle (16) der Antriebseinheit (8) im Gehäuse (22) der Letzteren an einem ersten Ende gelagert ist, welches von der angetriebenen Einheit (9) wegzeigt, und die Wellenkupplung (17) an einem zweiten Ende der Welle (16) angeordnet ist, welches in Richtung der angetriebenen Einheit (9) zeigt, wobei die Wellenkupplung zum Übertragen von Radialkräften an der Welle (16) auf die Welle (18) der angetriebenen Einheit (9) angepasst ist, wobei die Kräfte durch mindestens ein Lager (20) aufgenommen werden, welches in der angetriebenen Einheit (9) angeordnet ist, und die Welle (16) der Antriebseinheit (8) nur an ihrem ersten Ende gelagert ist und bis innerhalb des Gehäuses (22) der Antriebseinheit (8) hineinreicht, d.h. bis innerhalb der Stirnwand (26) des Gehäuses (22), und außerdem die hülsenartige Kupplung (17) ganz oder teilweise innerhalb des Gehäuses (22) der Antriebseinheit (8) angeordnet ist, d.h. innerhalb der Stirnwand (26) des Gehäuses (22).

2. Vorrichtung nach Anspruch 1,
**dadurch gekennzeichnet, dass** die Welle (16) der Antriebseinheit (8) und die Welle (18) der angetriebenen Einheit (9) koaxial zueinander angeordnet sind.

3. Vorrichtung nach einem oder mehreren der vorhergehenden Ansprüche,
**dadurch gekennzeichnet, dass** die Wellenkupplung (17) im Wesentlichen hülsenartig ist.

4. Vorrichtung nach einem oder mehreren der vorhergehenden Ansprüche,
**dadurch gekennzeichnet, dass** die Wellenkupplung (17) dazu ausgebildet ist, leicht zu lösen zu sein.

5. Vorrichtung nach einem oder mehreren der vorhergehenden Ansprüche,
**dadurch gekennzeichnet, dass** die Antriebseinheit (8) ein Elektromotor ist.

6. Vorrichtung nach einem oder mehreren der vorhergehenden Ansprüche,
**dadurch gekennzeichnet, dass** die angetriebene Einheit (9) ein Differential ist.

7. Fahrzeug, welches eine Vorrichtung nach einem der Ansprüche 1 bis 6 umfasst.

## Revendications

1. Dispositif pour un véhicule automobile comprenant une unité motrice (8) qui comporte un carter (22), et une unité réceptrice (9) reliée mécaniquement à l'unité motrice (8) par l'intermédiaire d'un accouplement d'arbres (17), dans lequel l'arbre (16) de l'unité motrice (8) est supporté dans le carter (22) de cette dernière à une première extrémité, laquelle pointe dans le sens qui s'éloigne de l'unité réceptrice (9) et en ce que ledit accouplement d'arbres (17) est disposé à une seconde extrémité de l'arbre (16), laquelle pointe vers l'unité réceptrice (9), lequel accouplement d'arbres est adapté pour transmettre des forces radiales qui s'exercent sur l'arbre (16) à l'arbre (18) de l'unité réceptrice (9), lesquelles forces sont absorbées par au moins un palier (20) disposé dans l'unité réceptrice (9), et l'arbre (16) de l'unité motrice (8) est seulement supporté à sa première extrémité et s'étend dans le carter (22) de l'unité motrice (8), c'est-à-dire dans la paroi d'extrémité (26) du carter (22), par ailleurs, l'accouplement en forme de manchon (17) est entièrement ou partiellement disposé dans le carter (22) de l'unité motrice (8), c'est-à-dire dans la paroi terminale (26) du carter (22).

2. Dispositif selon la revendication 1, **caractérisé en ce que** l'arbre (16) de l'unité motrice (8) et l'arbre (18) de l'unité réceptrice (9) sont disposés coaxialement entre eux.

3. Dispositif selon une ou plusieurs des revendications précédentes, **caractérisé en ce que** l'accouplement d'arbres (17) est sensiblement en forme de manchon.

4. Dispositif selon une ou plusieurs des revendications précédentes, **caractérisé en ce que** l'accouplement d'arbres (17) est adapté pour être facile à démonter

5. Dispositif selon une ou plusieurs des revendications précédentes, **caractérisé en ce que** l'unité motrice (8) et un moteur électrique.

6. Dispositif selon une ou plusieurs des revendications précédentes, **caractérisé en ce que** l'unité réceptrice (9) est un différentiel.

7. Véhicule comprenant un dispositif selon une quelconque des revendications 1 à 6.
